# EUROPEAN PATENT APPLICATION

(11) **EP 3 358 719 A1**
(43) Date of publication of application: **08.08.2018**
(21) Application number: 18152046.1
(22) Date of filing: 17.01.2018
(51) Int. Cl.: H02K 3/18, H02K 29/00

(54) **ROTARY COMPRESSOR SYSTEM, ROTARY COMPRESSOR, AND MOTOR**

(30) Priority: 01.02.2017 JP 2017016618
(71) Applicant: MITSUBISHI HEAVY INDUSTRIES THERMAL SYSTEMS, LTD., Tokyo 108-8215 (JP)
(72) Inventor: OGAWA, Makoto, TOKYO, 108-8215 (JP); SATO, Hajime, TOKYO, 108-8215 (JP); SASAKI, Mikito, TOKYO, 108-8215 (JP); SHIMIZU, Kenji, TOKYO, 108-8215 (JP); WATANABE, Takashi, TOKYO, 108-8215 (JP)
(74) Representative: Cabinet Beau de Loménie

(57) **Abstract**

A system including a rotary compressor (10) for a high efficiency air conditioner is provided. A rotary compressor system includes a rotary compressor (10) and a sensorless vector control circuit (1) configured to control a motor (18) included in the rotary compressor (10), wherein, in the motor (18), a product of a conductor cross-sectional area and the number of turns of a winding (21) is in a range of 40 mm² or more and less than 65 mm². In the sensorless vector control circuit (1), fluctuation in angular velocity of a piston rotor included in the rotary compressor is minimized using MRAS control.

## Description

### BACKGROUND OF THE INVENTION

### Field of the Invention

The present invention relates to a rotary compressor system, a rotary compressor, and a motor.

Priority is claimed on Japanese Patent Application No. 2017-016618, filed February 1, 2017, the content of which is incorporated herein by reference.

### Description of Related Art

In response to the demand for energy saving in recent years, an annual performance factor (APF) is also emphasized in compressors for air conditioners. Generally, in compressors, efficiency decrease at the time of a low speed operation in many cases and efficiency improvement in a low speed region also greatly contribute to improvement of an APF. In losses of a motor included in a compressor, a copper loss is significant at the time of a low speed operation, and it is necessary to reduce the copper loss to improve efficiency in the low speed region.

One method for reducing a copper loss is a method for increasing a winding diameter and decreasing a winding resistance value by reducing an outer diameter of a motor rotor and increasing a size of a stator winding slot.

Note that Patent Document 1 discloses a compressor configured to minimize fluctuation in rotational speed during one rotation by increasing the moment of inertia of a motor rotor while winding resistance and a current density are minimized, thereby allowing a highly efficient operation.

### [Patent Document]

[Patent Document 1] Japanese Unexamined Patent Application, First Publication No. 2006-183474

### SUMMARY OF THE INVENTION

However, when a motor rotor outer diameter is reduced, the inertia in a rotational direction is reduced, the fluctuation in angular velocity occurs due to the fluctuation in gas compression torque, and thus efficiency of the motor is reduced. Therefore, this does not lead to improvement of an annual performance factor (APF). In order to improve motor efficiency, copper loss reduction countermeasures are required to be implemented while a motor rotor outer diameter is reduced.

Thus, an objective of the present invention is to provide a rotary compressor system, a rotary compressor, and a motor capable of solving the above problems.

A first aspect of the present invention is a rotary compressor system including: a rotary compressor; and a sensorless vector control circuit configured to control a motor included in the rotary compressor, wherein, in the motor, a product of a conductor cross-sectional area and the number of turns of a winding is in a range of 40 mm² or more and less than 65 mm².

In the rotary compressor system according to a second aspect of the present invention, in the motor, the product of the conductor cross-sectional area and the number of turns of the winding is in a range of 50 mm² or more and less than 63 mm².

In the rotary compressor system according to a third aspect of the present invention, in the motor, the product of the conductor cross-sectional area and the number of turns of the winding is in a range of 57 mm² or more and less than 60 mm².

A fourth aspect of the present invention is a rotary compressor including: a motor configured to be controlled through sensorless vector control, wherein, in the motor, a product of a conductor cross-sectional area and the number of turns of a winding is in a range of 40 mm² or more and less than 65 mm².

A fifth aspect of the present invention is a rotary compressor for an air conditioner including: a motor in which a product of a conductor cross-sectional area and the number of turns of a winding is in a range of 40 mm² or more and less than 65 mm².

A sixth aspect of the present invention is a motor for mounting in a rotary compressor for an air conditioner, wherein a product of a conductor cross-sectional area and the number of turns of a winding is in a range of 40 mm² or more and less than 65 mm².

According to the present invention, it is possible to reduce a copper loss of a motor, realize high efficiency of the motor, and realize high efficiency of a compressor by increasing the winding diameter of a coil and thus decreasing the winding resistance value.

### BRIEF DESCRIPTION OF THE DRAWINGS

FIG. 1 is a vertical cross-sectional view of a rotary compressor according to an embodiment of the present invention.
FIG. 2 is a first diagram showing a control circuit of the rotary compressor according to the embodiment of the present invention.
FIG. 3 is a second diagram showing a control circuit of the rotary compressor according to the embodiment of the present invention.
FIG. 4 is a cross-sectional view of a motor included in the rotary compressor according to the embodiment of the present invention.
FIG. 5 is a cross-sectional view of a motor included in a rotary compressor in the related art.

### DETAILED DESCRIPTION OF THE INVENTION

### <Embodiment>

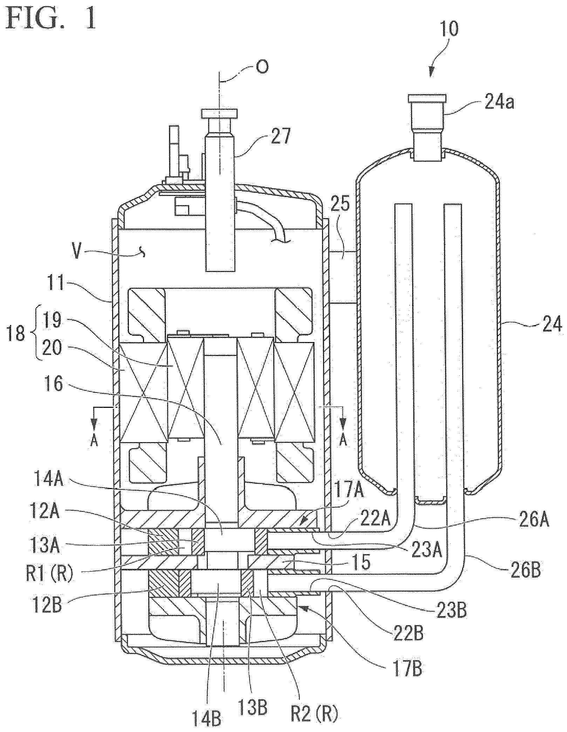

A rotary compressor system according to an embodiment of the present invention will be described below with reference to FIGS. 1 to 5.

FIG. 1 is a side cross-sectional view of a rotary compressor according to a first embodiment of the present invention.

As shown in FIG. 1, a compressor 10 according to the embodiment includes a motor 18, a crankshaft 16 rotating along with the motor 18, piston rotors 13A and 13B eccentrically rotating along with the rotation of the crankshaft 16, cylinders 12A and 12B having compression chambers for accommodating the piston rotors 13A and 13B formed therein, and a housing 11 forming a discharge space V through which a compressed refrigerant is discharged and surrounding the cylinders 12A and 12B.

The compressor 10 is a so-called two-cylinder type rotary compressor in which the disk-like cylinders 12A and 12B are provided in two upper and lower stages in the cylindrical housing 11. The cylindrical piston rotors 13A and 13B having external forms smaller than inner sides of inner wall surfaces of the cylinders are arranged in the cylinders 12A and 12B. The piston rotors 13A and 13B are inserted and fixed into eccentric shaft parts 14A and 14B of a rotational axis along a central axis of the housing 11.

The upper-cylinder-side piston rotors 13A and the lower-cylinder-side piston rotor 13B are provided such that their phases differ from each other by 180°.

Also, a disk-like partition plate 15 is provided between the upper and lower cylinders 12A and 12B. A space R in the upper-side cylinder 12A and a lower space R are partitioned into compression chambers R1 and R2 by the partition plate 15 without communicating with each other.

The crankshaft 16 is supported to be rotatable about an axis O by an upper bearing part 17A fixed to the cylinder 12A and a lower bearing part 17B fixed to the cylinder 12B.

The crankshaft 16 has the eccentric shaft parts 14A and 14B offset in a direction which is perpendicular to a central line of the crankshaft 16. The eccentric shaft parts 14A and 14B are pivoted about a central axis of the crankshaft 16 so that the upper and lower piston rotors 13A and 13B rotates eccentrically in the cylinders 12A and 12B following such pivoting.

The crankshaft 16 protrudes upward (that is, in a direction in which the motor 18 is located when viewed from the compressor 10) from the upper bearing part 17A. A motor rotor 19 of the motor 18 configured to rotatably drive the crankshaft 16 is integrally provided on an end portion of the crankshaft 16 in an axis O direction. A stator 20 is fixed and provided on an inner circumferential surface of the housing 11 to face an outer circumferential portion of the motor rotor 19.

In the compressor 10, an accumulator 24 configured to perform gas-liquid separation on a refrigerant before supplying the refrigerant to the compressor 10 is fixed to the housing 11 via a stay 25. Intake pipes 26A and 26B configured to suction a refrigerant in the accumulator 24 into the compressor 10 are provided in the accumulator 24. Distal end portions of the intake pipes 26A and 26B are connected to suction ports 23A and 23B through openings 22A and 22B.

The compressor 10 takes the refrigerant from a suction port 24a of the accumulator 24 into the accumulator 24. To be specific, the compressor 10 performs gas-liquid separation on the refrigerant in the accumulator 24, and supplies the gas phase from the intake pipes 26A and 26B to the compression chambers R1 and R2 serving as internal spaces of the cylinder 12A and 12B via the suction ports 23A and 23B of the cylinder 12A and 12B.

Moreover, the piston rotors 13A and 13B eccentrically rotate so that the volumes of the compression chambers R1 and R2 gradually decrease and thus the refrigerant is compressed. The refrigerant passes around the motor 18 and is then discharged to a pipe 27 constituting a refrigeration cycle via a discharge port provided at an upper part.

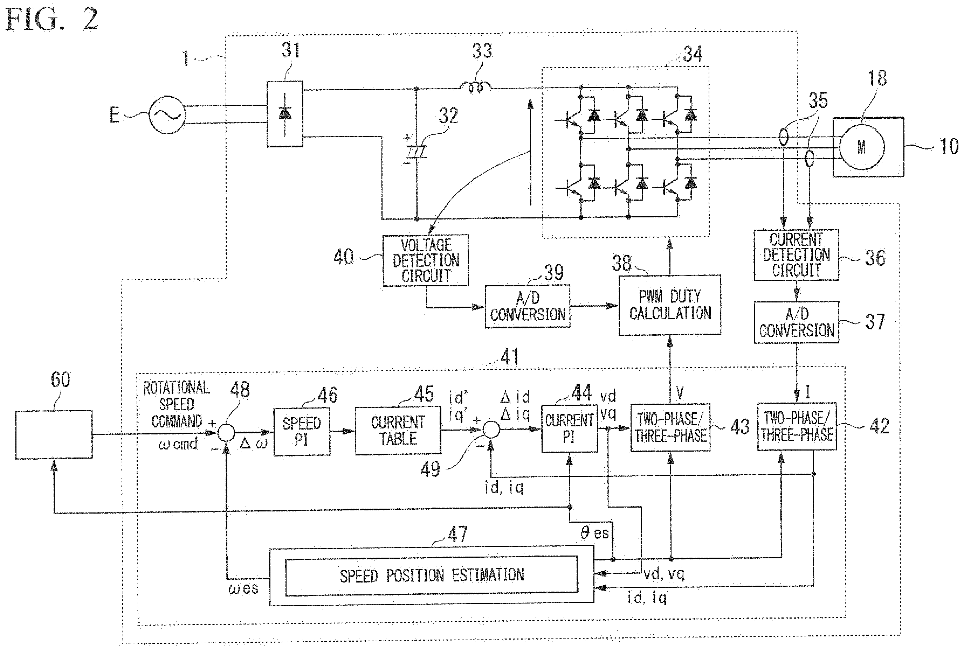

FIG. 2 is a first diagram showing a control circuit of the rotary compressor according to the embodiment of the present invention.

FIG. 2 shows a block diagram of a sensorless vector control circuit 1 configured to control the motor 18. The sensorless vector control circuit 1 shown in FIG. 2 includes a converter 31, a capacitor 32, a reactor 33, an inverter 34, a current sensor 35, a current detection circuit 36, an analog/digital (A/D) conversion circuit 37, a pulse width modulation (PWM) duty calculation circuit 38, an A/D conversion circuit 39, a voltage detection circuit 40, and a full vector control circuit 41. Furthermore, the full vector control circuit 41 includes a two-phase/three-phase conversion circuit 42, a two-phase/three-phase conversion circuit 43, a current proportional integral (PI) control circuit 44, a current conversion table 45, a speed PI control circuit 46, a speed position estimation circuit 47, a subtracter 48 and a subtracter 49.

Note that the rotary compressor system includes a rotational speed control device 60, the sensorless vector control circuit 1, and the rotary compressor 10.

The converter 31 rectifies a three-phase alternating current (AC) input from an electric power system E. The capacitor 32 and the reactor 33 smooth the rectified voltage and generate a direct current (DC) voltage. The inverter 34 generates a three-phase drive voltage from the DC input voltage on the basis of a duty command value output by the PWM duty calculation circuit 38 and supplies a drive voltage to the motor 18 included in the compressor 10. Thus, the sensorless vector control circuit 1 drives the motor 18.

The current detection circuit 36 detects a current flowing through the motor 18 and outputs the detection result to the A/D conversion circuit 37. The A/D conversion circuit 37 converts the current detected by the current detection circuit 36 into a digital signal and outputs the converted signal to the full vector control circuit 41. In the full vector control circuit 41, the two-phase/three-phase conversion circuit 42 performs coordinate conversion (dq conversion) on a three-phase signal input from the A/D conversion circuit 37 and outputs converted current values id and iq to the speed position estimation circuit 47. At this time, the two-phase/three-phase conversion circuit 42 refers to a previous estimation value θes of a magnetic pole angle by the motor rotor 19 which will be described below. The speed position estimation circuit 47 receives current values id and iq and electric power command values vd and vq in a dq coordinate system output by the current PI control circuit 44 as inputs and calculates an estimation value ωes of a rotational speed of the motor 18 and an estimation value θes of a magnetic pole angle (an angle of a magnetic pole position) of the motor rotor 19 using, for example, a method called a model reference adaptive system (MRAS).

The rotational speed control device 60 outputs a command value ωcmd of a rotational speed to the full vector control circuit 41. The subtracter 48 calculates a deviation Δω between a command value ωcmd of a rotational speed by the rotational speed control device 60 and an estimation value ωes of a rotational speed estimated by the speed position estimation circuit 47 and outputs the calculated deviation to the speed PI control circuit 46. The speed PI control circuit 46 calculates a torque command value for reducing the deviation (to 0) by PI control on the basis of Δω. The full vector control circuit 41 converts the torque command values into current command values id' and iq' on the basis of the current conversion table 45. The subtracter 49 calculates deviations Δid and Δiq between the current command values id' and iq' and id and iq output by the two-phase/three-phase conversion circuit 42 and outputs the calculation results to the current PI control circuit 44. The current PI control circuit 44 calculates voltage command values vd and vq for reducing the deviations (to 0) by the PI control on the basis of the deviations Δid and Δiq. The current PI control circuit 44 outputs the voltage command values vd and vq to the two-phase/three-phase conversion circuit 43. The two-phase/three-phase conversion circuit 43 performs coordinate conversion of the voltage command values vd and vq from two phases to three phases by referring to the estimation value θes of the magnetic pole angle of the motor rotor 19 estimated by the speed position estimation circuit 47 and outputs the converted voltage command value V to the PWM duty calculation circuit 38. The PWM duty calculation circuit 38 receives the voltage command value V and a signal obtained by digitally converting the DC input voltage to the inverter 34 detected by the voltage detection circuit 40 using the A/D conversion circuit 39 as inputs and calculates a duty command value. The PWM duty calculation circuit 38 outputs the calculated duty command value to the inverter 34.

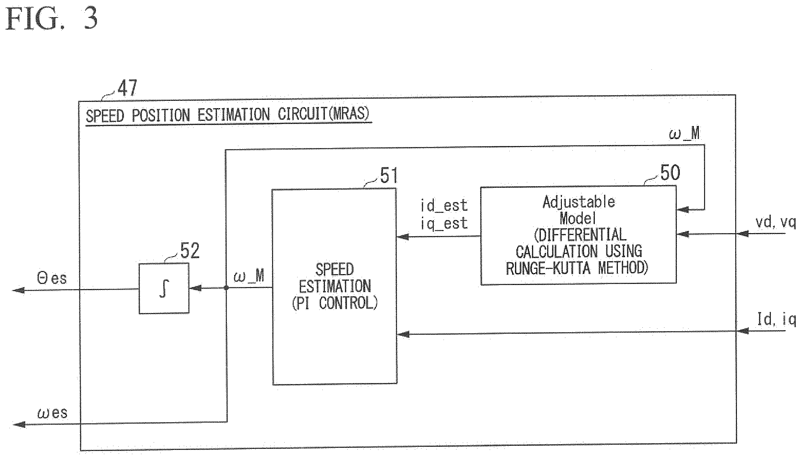

FIG. 3 is a second diagram showing the control circuit of the rotary compressor according to the embodiment of the present invention.

FIG. 3 shows a block diagram of the speed position estimation circuit 47. The speed position estimation circuit 47 includes a current estimation circuit 50, a speed estimation circuit 51, and an integrating circuit 52. The current estimation circuit 50 receives the electric power command values vd and vq and an estimation value ω_M of a rotational speed of the motor rotor 19 estimated by the speed estimation circuit 51 as inputs and estimates current estimation values id_est and iq_est on the basis of an adaptive model (an adjustable model) obtained by modeling the motor 18. The speed estimation circuit 51 receives the current estimation values id_est and iq_est and id and iq as inputs and estimates the rotational speed (ω_M). The integrating circuit 52 integrates the estimation value ω_M of the rotational speed and calculates an estimation value θes of the magnetic pole angle of the motor rotor 19. The speed position estimation circuit 47 uses the estimation value ω_M of the rotational speed estimated by the speed estimating circuit 51 as the estimation value ωes of the rotational speed and outputs the estimation value ω_M together with the estimation value θes of the magnetic pole angle of the motor rotor 19 calculated by the integrating circuit 52.

Since the inside of the compressor 10 becomes a high temperature and high pressure environment, it is difficult to provide a sensor configured to detect a position of a piston rotor 13. According to sensorless vector control (for example, MRAS control) using the control circuit shown in FIGS. 2 and 3, the rotational speed or the magnetic pole angle of the motor rotor 19 can be detected with high accuracy without using a sensor. Furthermore, since the motor rotor 19, the crankshaft 16, and the piston rotors 13A and 13B are constituted integrally and rotate, a magnetic pole angle of the motor rotor 19 and positions of the piston rotors 13A and 13B are considered to be in a predetermined positional relationship. For this reason, the positions of the piston rotors 13A and 13B are estimated and controlled with high precision through the MRAS control and thus fluctuation in angular velocity of the crankshaft 16 can be minimized. Generally, since the rotary compressor receives a force from the high pressure refrigerant gas as the compression of the refrigerant gas in the cylinders 12A and 12B progresses, the gas compression torque largely fluctuates during one compression process. As a result, the angular velocity of the crankshaft 16 during the compression process fluctuates. However, when the MRAS control according to the embodiment is introduced, the rotational speed control device 60 calculates the command value of the rotational speed so that the fluctuation appearing in the estimation value of the rotational speed or the magnetic pole angle of the motor rotor 19 is minimized. Thus, the fluctuation in the angular velocity of the crankshaft 16 can be minimized.

Considering the countermeasures against the gas compression torque fluctuation during the compression process from another point of view, in the motor control in the related art (when the MRAS control is not used), it is necessary to gain the inertia by designing a size of the motor rotor 19 to be somewhat large to reduce an influence of the gas compression torque fluctuation. However, since a rotational speed of the motor rotor 19 can be kept constant by introducing the MRAS control, the motor rotor 19 can be miniaturized without considering the above constraints. The efficiency of the motor can be improved by reducing the size of the motor rotor 19. An example of miniaturization of the motor rotor 19 and its effect will be described below.

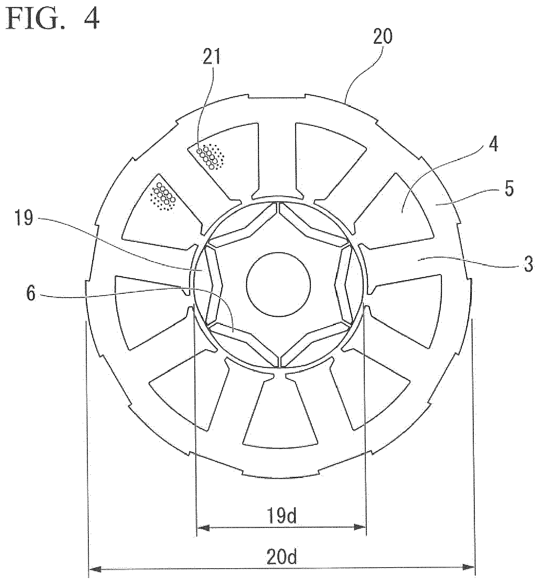

FIG. 4 is a cross-sectional view of a motor included in the rotary compressor according to the embodiment of the present invention. FIG. 4 shows the motor 18 in the cross-sectional view taken along line A-A in the compressor 10 of FIG. 1. FIG. 4 is the cross-sectional view of the motor 18 in which the MRAS control according to the embodiment is actually applied and the compressor 10 can be driven at a desired rotational speed by minimizing the fluctuation of the rotational speed.

In FIG. 4, the stator 20 includes nine tooth parts 3, nine winding slot parts 4, and a yoke part 5. Magnets 6 corresponding to six poles are arranged in the motor rotor 19.

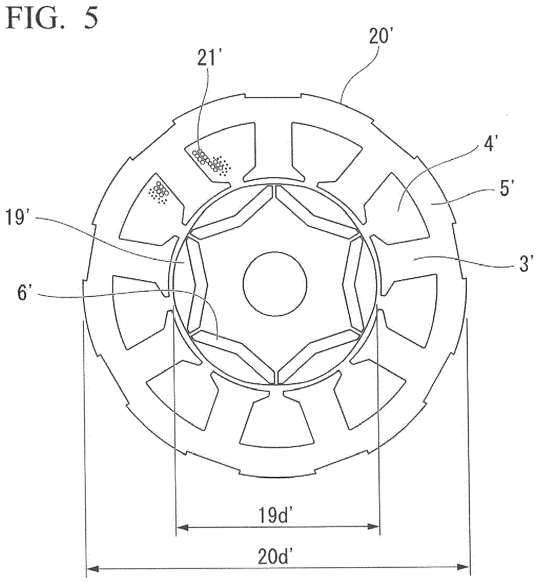

FIG. 5 is a cross-sectional view of a motor in the related art included in a rotary compressor shown for comparison. FIG. 5 is a cross-sectional view of the motor incorporated and used in the compressor 10 instead of the motor 18 when the MRAS control is not applied.

In FIG. 5, the stator 20' includes nine tooth parts 3', nine winding slot parts 4', and a yoke part 5'. Magnets 6' corresponding to six poles are arranged in the motor rotor 19'. Here, a stator outer diameter 20d shown in FIG. 4 is equivalent to a stator outer diameter 20d' shown in FIG. 5, and an outer diameter 19d of the motor rotor 19 is smaller than an outer diameter 19d' of the motor rotor 19'.

When a speed fluctuation minimizing effect using the MRAS control is assumed, the outer diameter of the motor rotor 19 can be reduced as described above. Furthermore, areas of the winding slot parts 4 of the stator 20 can be increased as described above by reducing the outer diameter of the motor rotor 19 (note that widths of the tooth parts 3 and the tooth parts 3' are the same, and the areas of the winding slot parts 4 are increased only by reducing the outer diameter of the motor rotor 19). For example, in the shown example, the total area of the winding slot parts 4 is about 1.7 times the total area of the winding slot parts 4'. Furthermore, in the case of the stator 20 shown in FIG. 4, a ratio of the total area of the nine winding slot parts 4 to the total area of the stator 20 is about 32%. On the other hand, in the case of the stator 20' in the related art shown in FIG. 5, a ratio of the total area of the nine winding slot parts 4' to the total area of the stator 20' is about 23%. Note that, for calculation purposes, a winding slot area of a motor with the same size (for example, a motor whose stator outer diameter is in a range of 100 mm to 112 mm) as that used for the rotary compressor of an air conditioner is considered to be able to be enlarged to the same extent. Furthermore, it is also possible to perform a design such that the ratio has any value between 25% and 40% even when the ratio of the total area of the nine winding slot parts 4 to the total area of the stator 20 is not 32%. 25% is, for calculation purposes, a lower limit of the above ratio when a significant effect of a copper loss reduction effect which will be described below is obtained as compared with the related art (in the case of 23%). Furthermore, when problems of strength, vibration, noise, and the like occur in a case in which the ratio of the total area of the winding slot parts 4 to the total area of the stator 20 is too large, 40% is the maximum value of the above ratio in which an operation is possible while such problems are avoided.

It is thought that a motor efficiency improvement effect which will be described below can also be obtained with respect to the motor in which the above ratio is designed in a range of 25% to 40% as compared with a motor mounted in the rotary compressor in the related art designed for the air conditioner.

Also, the total area of the winding slot parts 4 is about 1.7 times the total area of the winding slot parts 4' so that windings 21 having a larger diameter can be wound around the tooth parts 3 while the same number of turns is maintained. In other words, the same induced voltage with the same control as the motor in the related art shown in FIG. 5 can be generated while the number of turns is not changed, resistance can be reduced by increasing a winding diameter, and thus a copper loss can be reduced. In the case of this example, in the motor shown in FIG. 5, the concentration winding (70 turns) of the winding 21' with a diameter of 0.8 mm and one star connection is performed on the six poles. In this case, a conductor cross-sectional area is about 0.503 mm²(0.4 mm×0.4 mm×π). Furthermore, a product of the conductor cross-sectional area and the number of turns is 0.503 mm²×70 = 35.21 mm². On the other hand, in the motor shown in FIG. 4, the concentration winding (210 turns) of the winding 21 with a diameter of 0.6 mm and three star connection is performed on the six poles. In this case, the conductor cross-sectional area is about 0.848 mm² (0.3 mm×0.3 mm×π×3). Furthermore, a product of the conductor cross-sectional area and the number of turns is 0.848 mm²×70 = 59.346 mm². The conductor cross-sectional area is also set to be about 1.7 times the conductor cross-sectional area in the related art like in the total area of the winding slot parts 4.

Note that, for example, there are motors for 100 V, 200 V, and 400 V depending on the magnitude of the applied voltage while a size of a stator outer diameter or a rotor motor outer diameter is maintained. At present, with regard to the motors depending on the applied voltages, when a conductor cross-sectional area of a winding at the motor for 100 V is Y mm² and the number of turns of the winding is 100 turns, the conductor cross-sectional area of the winding of the motor for 200 V is 0.5×Y mm² and the number of turns of the winding is 200 turns, and the conductor cross-sectional area of the winding of the motor for 400 V is 0.25×Y mm² and the number of turns of the winding is 400 turns. Relationships among the applied voltage, the conductor cross-sectional area, and the number of turns are the same even when the MRAS control according to the embodiment is applied. In other words, a value of a product of the conductor cross-sectional area and the number of turns does not change regardless of the applied voltage. For example, in the case of the above example, such a value is about 59.346 mm².

Note that, although an example in which the size of the motor rotor of the motor mounted in the rotary compressor for the air conditioner in which the stator outer diameter is in a range of 100 mm to 112 mm is reduced has been described in the above example, the applicant can further miniaturize the motor rotor outer diameter to the same extent by performing the miniaturization in which the MRAS control is assumed to be performed on the motor mounted in the rotary compressor for the air conditioner in which the stator outer diameter is in the range of 125 mm to 135 mm. As a result, the conductor cross-sectional area of the winding 21 can be enlarged to the same extent (about 0.848 mm²) as in the above example.

Also, the outer diameter of the motor rotor can also be designed to be miniaturized to about 90% of that of the related art while the MRAS control is applied even when the outer diameter of the motor rotor 19 is not reduced to that of the above example. Also in this case, it is thought that a higher efficiency effect than that of the motor mounted in the rotary compressor in the related art designed for the air conditioner can be obtained. Furthermore, in this case, a copper loss can be reduced by increasing a thickness of the winding (for example, 0.57 mm²) and decreasing the resistance as compared with the related art even when the conductor cross-sectional area of the winding 21 is not increased to about 0.848 mm². Furthermore, in the case of the miniaturized motor shown in FIG. 4, such a motor has the increased winding diameter and the reduced copper loss to exhibit the same performance under the same control as the motor in the related art and about 0.848 mm² serving as a size of the conductor cross-sectional area of the winding 21 is not the maximum value. For example, the conductor cross-sectional area of the winding 21 may be expanded to about 0.92 mm².

According to the embodiment, since the fluctuation of the rotational speed can be minimized through the MRAS control, the size and weight of the motor rotor 19 can be reduced as described above and thus the efficiency of the motor 18 can be improved. Furthermore, an amount of use of the magnets 6 can be reduced and the manufacturing costs can be reduced by reducing the outer diameter of the motor rotor 19. The stator 20 can be enlarged to a space occupied by the motor rotor 19 and the areas of the winding slot parts 4 can be enlarged. The winding diameters of coils can be increased by enlarging the areas of the winding slot parts 4. The resistance of the coil can be reduced by increasing the winding diameters of the coils and thus the copper loss can be reduced. Thus, it is possible to improve the efficiency of the motor 18, realize high efficiency of the compressor 10, and realize improvement of an annual performance factor (APF).

For example, in the case of a heating intermediate output operation having a higher contribution rate for the APF improvement (in an operation state having the lower APF) than operations at a heating rated output, a cooling rated output, and a cooling intermediate output, it is known that a ratio of the copper loss in the motor loss is higher than the iron loss. Therefore, it is possible to reduce the copper loss of the motor 18 in the heating intermediate output operation and improve the motor efficiency, the compressor efficiency, and the APF of the air conditioner by applying the rotary compressor system according to the embodiment to the air conditioner.

Note that various types of motors such as permanent magnet synchronous motors and induced motors can be applied for the motor 18.

Also, although an example in which the stator outer diameter is 100 mm to 112 mm and an example in which the stator outer diameter is 125 mm to 135 mm have been described in the above embodiment, the present invention is not limited thereto. For example, a motor with a stator outer diameter of about 90 mm and a motor with a stator outer diameter of about 170 mm can also be miniaturized to the same extent, and it is thought that a product of the conductor cross-sectional area and the number of turns of the winding 21 can be enlarged to about 40 mm² to 65 mm².

In addition, the constituent elements in the above-described embodiment can be appropriately replaced with well-known constituent elements without departing from the scope of the present invention, which is defined by the claims. Furthermore, the technical scope of the present invention is not limited to the above-described embodiment and various modifications can be performed without departing from the scope of the present invention as defined by the claims. For example, although an example of the motor with six poles and nine slots has been described in the above examples, it is thought that the same effect can also be obtained with respect to motors having other numbers of poles and slot steps (for example, four poles and six slots). Note that the rotary compressor system includes the rotational speed control device 60, the sensorless vector control circuit 1, and the rotary compressor 10. The rotary compressor system according to the embodiment is used for the air conditioner.

Note that the total area of the nine winding slot parts 4 is an example of the winding slot area and the total area of the stator 20 is an example of the stator area.

While preferred embodiments of the invention have been described and shown above, it should be understood that these are exemplary of the invention and are not to be considered as limiting. Additions, omissions, substitutions, and other modifications can be made without departing from the scope of the present invention, which is defined by the claims. Accordingly, the invention is not to be considered as being limited by the foregoing description, and is only limited by the scope of the appended claims.

### EXPLANATION OF REFERENCES

1 Sensorless vector control circuit
3, 3' Tooth part
4, 4' Winding slot part
5, 5'Yoke part
6, 6' Magnet
10 Compressor
11 Housing
12A, 12B Cylinder
13A, 13B Piston rotor
16 Crankshaft
18 Motor
19, 19' Motor rotor
20, 20' Stator
20d, 20d' Stator outer diameter
21, 21' Winding
22A, 22B Opening
23A, 23B Suction port
24 Accumulator
25 Stay
26A, 26B Intake pipe
31 Converter
32 Capacitor
33 Reactor
34 Inverter
35 Current sensor
36 Current detection circuit
37 A/D conversion circuit
38 PWM duty calculation circuit
39 A/D conversion circuit
40 Voltage detection circuit
41 Full vector control circuit
42, 43 Two-phase/three-phase conversion circuit
44 Current PI control circuit
45 Current conversion table
46 Speed PI control circuit
47 Speed position estimation circuit
48 Subtracter
49 Subtracter
50 Current estimation circuit
51 Speed estimation circuit
52 Integrating circuit

## Claims

1. A rotary compressor system comprising:
a rotary compressor (10); and
a sensorless vector control circuit (1) configured to control a motor (18) included in the rotary compressor (10),
wherein, in the motor (18), a product of a conductor cross-sectional area and the number of turns of a winding (21) is in a range of 40 mm² or more and less than 65 mm².

2. The rotary compressor system according to claim 1, wherein, in the motor (18), the product of the conductor cross-sectional area and the number of turns of the winding (21) is in a range of 50 mm² or more and less than 63 mm².

3. The rotary compressor system according to claim 1 or 2, wherein, in the motor (18), the product of the conductor cross-sectional area and the number of turns of the winding (21) is in a range of 57 mm² or more and less than 60 mm².

4. A rotary compressor (10) comprising:
a motor (18) configured to be controlled through sensorless vector control,
wherein, in the motor (18), a product of a conductor cross-sectional area and the number of turns of a winding (21) is in a range of 40 mm² or more and less than 65 mm².

5. A rotary compressor (10) for an air conditioner, comprising:
a motor (18) in which a product of a conductor cross-sectional area and the number of turns of a winding (21) is in a range of 40 mm² or more and less than 65 mm².

6. A motor (18) for mounting in a rotary compressor (10) for an air conditioner, wherein a product of a conductor cross-sectional area and the number of turns of a winding (21) is in a range of 40 mm² or more and less than 65 mm².
